(19) Europäisches Patentamt
European Patent Office
Office européen des brevets

(11) **EP 3 862 377 A1**

(12) **EUROPÄISCHE PATENTANMELDUNG**

(43) Veröffentlichungstag:
**11.08.2021   Patentblatt 2021/32**

(51) Int Cl.:
**C08G 64/02** *(2006.01)*      **C08G 64/30** *(2006.01)*
**C08G 65/26** *(2006.01)*

(21) Anmeldenummer: **20155288.2**

(22) Anmeldetag: **04.02.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYETHERCARBONATPOLYOLEN**

(57)    Gegenstand der Erfindung ist ein Verfahren zur Herstellung von Polyethercarbonatpolyolen durch Anlagerung cyclischen Carbonats an eine H-funktionelle Startersubstanz in Anwesenheit eines Katalysators, dadurch gekennzeichnet, dass ein Kronenether als Co-Katalysator eingesetzt wird.

EP 3 862 377 A1

**Beschreibung**

Die vorliegende Erfindung betrifft ein Verfahren zur Herstellung von Polyethercarbonatpolyolen durch katalytische Anlagerung cyclischen Carbonats an eine H-funktionelle Startersubstanz in Anwesenheit eines Co-Katalysators.

Es ist bekannt, dass cyclische Carbonate, wie z.B. cyclisches Propylencarbonat, als Monomer in der Herstellung von Polycarbonatpolyolen eingesetzt werden können. Diese Umsetzung basiert auf einer Umesterung und wird in Anwesenheit von Katalysatoren wie beispielsweise Titan-Verbindungen, wie Titandioxid oder Titantetrabutylat (EP 0 343 572), Zinn-Verbindungen, wie Zinndioxid oder Dibutylzinnoxid (DE 2 523 352), Alkalimetallcarbonate oder -acetate (DE 1 495 299 A1) durchgeführt.

Ebenfalls offenbart ist der Einsatz von $Na_3VO_4$ und $Na_2WO_4$ als Katalysatoren für die Herstellung von Polyethercarbonatpolyolen durch Anlagerung cyclischen Ethylencarbonats an Monoethylenglykol und Diethylenglykol (R.F. Harris, Journal of Applied Polymer Science, 1989, 37, 183-200).

Der Nachteil der genannten Katalysator-Systeme ist die geringe Aktivität der Katalysatoren, die zu langen Reaktionszeiten und nicht vollständigen Umsätzen der Monomere führt. Die Aufgabe der vorliegenden Erfindung bestand deshalb darin, die Reaktionsgeschwindigkeit bei der Herstellung von Polyethercarbonatpolyolen durch Anlagerung von cyclischen Carbonaten zu erhöhen.

Überraschend wurde gefunden, dass die technische Aufgabe gelöst wird durch ein Verfahren zur Herstellung von Polyethercarbonatpolyolen durch Anlagerung cyclischen Carbonats an eine H-funktionelle Startersubstanz in Anwesenheit eines Katalysators, dadurch gekennzeichnet, dass ein Kronenether als Co-Katalysator eingesetzt wird.

Bei dem Verfahren kann zunächst eine H-funktionelle Startersubstanz und cyclisches Carbonat im Reaktor vorgelegt werden. Es kann dabei auch nur eine Teilmenge der H-funktionellen Startersubstanz und/oder eine Teilmenge cyclischen Carbonats im Reaktor vorgelegt werden. Anschließend wird gegebenenfalls die für die ringöffnende Polymerisation benötigte Menge an Katalysator in den Reaktor gegeben. Die Reihenfolge der Zugabe ist dabei nicht entscheidend. Es kann auch erst der Katalysator und anschließend eine H-funktionelle Startersubstanz und cyclisches Carbonat in den Reaktor gefüllt werden. Alternativ kann auch erst der Katalysator in einer H-funktionellen Startersubstanz suspendiert und anschließend die Suspension in den Reaktor gefüllt werden.

Der Katalysator wird vorzugsweise in einer Menge eingesetzt, so dass der Gehalt an Katalysator im resultierenden Reaktionsprodukt 10 bis 50000 ppm, besonders bevorzugt 20 bis 30000 ppm und höchst bevorzugt 50 bis 20000 ppm beträgt.

In einer bevorzugten Ausführungsform wird in das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C Inertgas (beispielsweise Argon oder Stickstoff) eingeleitet.

In einer alternativen bevorzugten Ausführungsform wird das resultierende Gemisch aus (a) einer Teilmenge H-funktioneller Startersubstanz, (b) Katalysator und (c) cyclischen Carbonats bei einer Temperatur von 20°C bis 120°C, besonders bevorzugt von 40°C bis 100°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), beaufschlagt und jeweils anschließend der Überdruck auf ca. 1 bar (absolut) reduziert.

Der Katalysator kann in fester Form oder als Suspension in cyclischem Carbonat, in H-funktioneller Startersubstanz oder in einer Mischung aus den genannten zugegeben werden.

In einer weiteren bevorzugten Ausführungsform wird in einem ersten Schritt eine Teilmenge der H-funktionellen Startersubstanzen und cyclisches Carbonat vorgelegt und in einem anschließenden zweiten Schritt die Temperatur der Teilmenge H-funktioneller Startersubstanz und des cyclischen Carbonats auf 40°C bis 120°C, bevorzugt 40°C bis 100°C gebracht und/oder der Druck im Reaktor auf weniger als 500 mbar, bevorzugt 5 mbar bis 100 mbar erniedrigt, wobei gegebenenfalls ein InertgasStrom (beispielsweise von Argon oder Stickstoff) angelegt wird und der Katalysator zur Teilmenge H-funktioneller Startersubstanz im ersten Schritt oder unmittelbar anschließend im zweiten Schritt zugesetzt wird.

Das resultierende Reaktionsgemisch wird dann bei einer Temperatur von 130°C bis 230°C, bevorzugt 140°C bis 200°C, besonders bevorzugt 160°C bis 190°C erhitzt, wobei gegebenenfalls ein InertgasStrom (beispielsweise von Argon oder Stickstoff) durch den Reaktor geleitet werden kann. Die Reaktion wird solange fortgeführt bis bei der eingestellten Temperatur keine Gasentwicklung mehr beobachtet wird. Die Reaktion kann ebenfalls unter Druck durchgeführt werden, bevorzugt bei einem Druck von 50 mbar bis 100 bar (absolut), besonders bevorzugt 200 mbar bis 50 bar (absolut), insbesondere bevorzugt 500 mbar bis 30 bar (absolut).

Wurde nur eine Teilmenge an H-funktioneller Startersubstanz und/oder eine Teilmenge an cyclischem Carbonat in den Reaktor vorgelegt, erfolgt die Dosierung der restlichen Menge an H-funktioneller Startersubstanz und/oder cyclischen Carbonats in den Reaktor kontinuierlich. Es ist möglich, das cyclische Carbonat mit konstanter Dosierrate zu dosieren oder die Dosierrate allmählich oder schrittweise zu steigern oder zu senken oder das cyclische Carbonat portionsweise zuzugeben. Bevorzugt wird das cyclische Carbonat mit konstanter Dosierrate dem Reaktionsgemisch zugegeben. Die Dosierung des cyclischen Carbonats bzw. der H-funktionellen Startersubstanzen kann simultan oder sequentiell über jeweils separate Dosierungen (Zugaben) erfolgen oder über eine oder mehrere Dosierungen, wobei die H-funktionellen Startersubstanzen einzeln oder als Gemisch dosiert werden kann.

In dem Verfahren können die cyclischen Carbonate einzeln oder als Gemische eingesetzt werden. Bevorzugt wird als cyclisches Carbonat cyclisches Propylencarbonat (cPC), cyclisches Ethylencarbonat (cEC) oder eine Mischung aus beiden eingesetzt.

Die Polyethercarbonatpolyole können in einem batch, semi-batch oder kontinuierlichen Verfahren hergestellt werden. Bevorzugt werden die Polyethercarbonatpolyole in einem kontinuierlichen Verfahren hergestellt, das sowohl eine kontinuierliche Polymerisation als auch eine kontinuierliche Zugabe der H-funktionellen Startersubstanz umfasst. Gegenstand der Erfindung ist daher auch ein Verfahren, wobei H-funktionelle Startersubstanz, cyclisches Carbonat sowie Katalysator kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei der Katalysator in H-funktioneller Startersubstanz suspendiert kontinuierlich zugegeben.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des Katalysators oder der Reaktanden aufrechterhalten wird. Die Zufuhr des Katalysators und der Reaktanden kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die Katalysatorkonzentration während des Hauptteils des Verlaufs der kontinuierlichen Reaktion im Wesentlichen auf derselben Konzentration gehalten wird und dass Startersubstanz während des Hauptteils des Polymerisations-Verfahrens vorhanden ist. Eine inkrementelle Zugabe von Katalysator und/oder Reaktand, der die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

### H-funktionelle Startersubstanz

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen.

Für die Alkoxylierung aktive Gruppen mit aktiven H-Atomen sind beispielsweise -OH, -NH$_2$ (primäre Amine), -NH- (sekundäre Amine), -SH und -CO$_2$H, bevorzugt sind -OH, -NH$_2$ und -CO$_2$H, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C$_1$-C$_{24}$ Alkyl-Fettsäureester, die im Mittel mindestens 2 OH-Gruppen pro Molekül enthalten und Wasser, eingesetzt. Beispielhaft handelt es sich bei den C$_1$-C$_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanz können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Dodecanol, Tetradecanol, Hexadecanol, Octadecanol, Eicosanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als Carbonsäuren seien genannt: Ameisensäure, Essigsäure, Propionsäure, Buttersäure, Acrylsäure, Oxalsäure, Malonsäure, Bernsteinsäure, Glutarsäure, Adipinsäure, Pimelinsäure, aromatische Carbonsäuren wie Benzoesäure, Terephthalsäure, Tetrahydrophthalsäure, Phthalsäure oder Isophthalsäure, Fettsäuren wie Stearinsäure, Palmitinsäure, Ölsäure, Linolsäure oder Linolensäure.

Als H-funktionelle Startersubstanz geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionelle Startersubstanz kann auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionelle Startersubstanz kann auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanz Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanz eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanz eingesetzten Polyethercarbonatpolyole werden hierzu in einem separaten Reaktionsschritt zuvor hergestellt.

Die H-funktionelle Startersubstanz weist im Allgemeinen eine Funktionalität (d.h. Anzahl an für die Polymerisation aktiven H-Atomen pro Molekül) von 1 bis 8, bevorzugt von 1 bis 3 auf. Die H-funktionelle Startersubstanz wird entweder einzeln oder als Gemisch aus mindestens zwei H-funktionellen Startersubstanzen eingesetzt.

Besonders bevorzugt handelt es sich bei der H-funktionellen Startersubstanz um mindestens eine Verbindungen ausgewählt aus der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

### Katalysator

Als geeignete Katalysatoren für die Anlagerung von cyclischen Carbonat an H-funktionelle Startersubstanzen können beispielsweise Alkalimetall- und Erdalkalimetallsalze von organischen Verbindungen, wie Carbonate, Acetate oder Salze von Fettsäuren, Alkalihydroxide, wie Natriumhydroxid, Titan-Verbindungen, wie Titandioxid oder Titantetrabutylat, Zinn-Verbindungen, wie Zinndioxid oder Dibutylzinnoxid, Molybdate, wie $Na_2MoO_4$, Wolframate, wie $Na_2WO_4$, Vanadate, wie $KVO_3$ oder $K_3VO_4$ und Phosphaten, wie $K_3PO_4$, eingesetzt werden. Bevorzugt wird mindestens eine Verbindung als Katalysator eingesetzt, die ausgewählt ist aus der Gruppe bestehend aus Molybdaten, Wolframaten, Vanadaten und Phosphaten, insbesondere bevorzugt aus der Gruppe bestehend aus tribasischen Alkaliphosphaten, Alkalimetallorthovanadaten, Alkalimetallmetavanadaten, Alkalimetallwolframaten und Alkalimetallmolybdaten.

Erfindungsgemäß wird als Co-Katalysator ein Kronenether eingesetzt. Kronenether sind makrocyclische Hohlraumbildende Oligoether. Der Makrocyclus kann je nach Ringgröße unterschiedliche Hohlräume bilden, was auch durch die Anzahl der komplexierenden O-Atome gekennzeichnet ist. Übliche Vertreter der Kronenether sind [12]Krone-4, [15]Krone-5, [18]Krone-6, wobei erstere Zahl die Anzahl an Ringgliedern des Cyclus beschreibt und die zweite Zahl die Anzahl komplexierenden O-Atome oder Heteroatome.

Weiterhin kann der Makrocyclus des Kronenethers substituiert sein, wie beispielsweise mit Phenylgruppen oder cyclischen Alkylgruppen. Die Sauerstoffatome des Kronenethers können dabei teilweise oder vollständig durch N, P oder S substituiert sein, wie beispielsweise Diaza-[18]Krone-6. Bevorzugt werden Kronenether eingesetzt, welche als Heteroatom im Makrocyclus nur Sauerstoff aufweisen. Besonders bevorzugt wird als Kronenether mindestens eine Verbindung eingesetzt, die ausgewählt ist aus der Gruppe bestehend aus [12]Krone-4, [15]Krone-5, [18]Krone-6, [21]Krone-7 und [24]Krone-8.

Der erfindungsgemäß als Co-Katalysator eingesetzte Kronenether wird bevorzugt in einem Verhältnis von Katalysator : Co-Katalysator von weniger als 1,0 : 10,0, besonders bevorzugt von 1,0 : 0,1 bis 1,0 : 5,0, insbesondere bevorzugt von 1,0 : 0,5 bis 1 : 1,2. Der Kronenether kann sowohl gemeinsam mit dem Katalysator als Gemisch als auch separat im eingesetzt werden.

Die nach dem erfindungsgemäßen Verfahren erhaltenen Polyethercarbonatpolyole können beispielsweise durch Umsetzung mit Di- und/oder Polyisocyanaten zu Polyurethanen weiterverarbeitet werden.

Weitere Anwendungsmöglichkeiten sind in Wasch- und Reinigungsmittelformulierungen, wie beispielsweise für Textil- oder Oberflächenreinigung, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen, wie beispielsweise in Haut- oder Sonnenschutzcreme oder Haarpflegeprodukten zu finden.

In einer ersten Ausführungsform betrifft die Erfindung ein Verfahren zur Herstellung von Polyethercarbonatpolyolen durch Anlagerung cyclischen Carbonats an eine H-funktionelle Startersubstanz in Anwesenheit eines Katalysators, dadurch gekennzeichnet, dass ein Kronenether als Co-Katalysator eingesetzt wird.

In einer zweiten Ausführungsform betrifft die Erfindung ein Verfahren gemäß erster Ausführungsform, dadurch gekennzeichnet, dass als Katalysator mindestens eine Verbindung eingesetzt wird, die ausgewählt ist aus der Gruppe bestehend aus Titanverbindungen, Zinnverbindungen, Alkalimetallcarbonaten, Alkalimetallacetaten, Molybdaten, Wolframaten, Vanadaten und Phosphaten.

In einer dritten Ausführungsform betrifft die Erfindung ein Verfahren gemäß erster Ausführungsform, dadurch gekennzeichnet, dass als Katalysator mindestens eine Verbindung eingesetzt wird, die ausgewählt ist aus der Gruppe bestehend aus Molybdaten, Wolframaten, Vanadaten und Phosphaten.

In einer vierten Ausführungsform betrifft die Erfindung ein Verfahren gemäß erster Ausführungsform, dadurch gekennzeichnet, dass als Katalysator mindestens eine Verbindung eingesetzt wird, die ausgewählt ist aus der Gruppe bestehend aus tribasischen Alkaliphosphaten, Alkalimetallorthovanadaten, Alkalimetallmetavanadaten, Alkalimetallwolframaten und Alkalimetallmolybdaten.

In einer fünften Ausführungsform betrifft die Erfindung ein Verfahren gemäß einer der Ausführungsformen 1 bis 4, dadurch gekennzeichnet, dass als cyclisches Carbonat Propylencarbonat, Ethylencarbonat oder eine Mischung aus Propylencarbonat und Ethylencarbonat eingesetzt wird.

In einer sechsten Ausführungsform betrifft die Erfindung ein Verfahren gemäß einer der Ausführungsformen 1 bis 5, dadurch gekennzeichnet, dass der Kronenether nur Sauerstoff als Heteroatom aufweist.

In einer siebten Ausführungsform betrifft die Erfindung ein Verfahren gemäß einer der Ausführungsformen 1 bis 5, dadurch gekennzeichnet, dass als Kronenether mindestens eine Verbindung eingesetzt wird, die ausgewählt ist aus der Gruppe bestehend aus [12]Krone-4, [15]Krone-5, [18]Krone-6, [21]Krone-7 und [24]Krone-8.

In einer achten Ausführungsform betrifft die Erfindung ein Verfahren gemäß einer der Ausführungsformen 1 bis 57, dadurch gekennzeichnet, dass die H-funktionelle Startersubstanz ein nach DIN 55672-1 (August 2007) gemessenes zahlenmittleres Molekulargewicht bis 10.000 g/mol, bevorzugt bis 5.000 g/mol, besonders bevorzugt bis 2.500 g/mol aufweist.

In einer neunten Ausführungsform betrifft die Erfindung ein Verfahren gemäß einer der Ausführungsformen 1 bis 8, dadurch gekennzeichnet, dass die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

In einer zehnten Ausführungsform betrifft die Erfindung ein Verfahren gemäß einer der Ausführungsformen 1 bis 9, dadurch gekennzeichnet, dass der Katalysator in einem Anteil von 10 bis 50000 ppm, besonders bevorzugt 20 bis 30000 ppm und höchst bevorzugt 50 bis 20000 ppm vorliegt.

In einer elften Ausführungsform betrifft die Erfindung ein Verfahren gemäß einer der Ausführungsformen 1 bis 10, dadurch gekennzeichnet, dass H-funktionelle Startersubstanz, cyclisches Propylencarbonat und Katalysator kontinuierlich in den Reaktor zudosiert wird.

In einer zwölften Ausführungsform betrifft die Erfindung ein Verfahren gemäß der elften Ausführungsform, dadurch gekennzeichnet, dass das resultierende Produkt kontinuierlich aus dem Reaktor abgeführt wird.

In einer dreizehnten Ausführungsform betrifft die Erfindung ein Verfahren gemäß einer der Ausführungsformen 1 bis 12, dadurch gekennzeichnet, dass das Verhältnis von Katalysator : Co-Katalysator weniger als 1,0 : 10,0 ist.

In einer vierzehnten Ausführungsform betrifft die Erfindung ein Polyethercarbonatpolyol erhalten durch ein Verfahren gemäß einer der Ausführungsformen 1 bis 13.

In einer fünfzehnten Ausführungsform betrifft die Erfindung die Verwendung des Polyethercarbonatpolyols gemäß der vierzehnten Ausführungsform in Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder zur Herstellung von Polyurethanen.

## Experimenteller Teil

Experimentell ermittelte OH-Zahlen wurden gemäß der Vorschrift DIN 53240-2 (November 2007) bestimmt. Das Molekulargewicht $M_n$ der entstandenen Polyethercarbonatpolyole wurde mittels Gelpermeationschromatographie (GPC) bestimmt. Es wurde nach DIN 55672-1 (August 2007): "Gelpermeationschromatographie, Teil 1 - Tetrahydrofuran als Elutionsmittel" vorgegangen und Polystyrolproben mit bekannter Molmasse zur Kalibrierung verwendet.

Der Anteil an eingebautem $CO_2$ im resultierenden Polyethercarbonatpolyol ($CO_2$-Gehalt) wurde mittels $^1$H-NMR Spektroskopie (Firma Bruker, AV III HD 600, 600 MHz; Pulsprogramm zg30, Wartezeit dl: 10s, 64 Scans) bestimmt. Die Probe wurde jeweils in deuteriertem Chloroform gelöst. Die relevanten Resonanzen im $^1$H-NMR Spektrum (bezogen auf TMS = 0 ppm) sind wie folgt:

Für gebildete olefinische (Allylalkohol/Ether-Gruppen) werden die Signale bei 6,01-5,88 ppm sowie 5,37-5,10 ppm verwendet (Summe von beiden entspricht einem Integral von 3 Protonen). Das verbleibende monomere Propylencarbonat (Signal bei 1,51-1,49 ppm), für im Polyethercarbonatpolyol eingebautem Kohlendioxid (Resonanzen bei 1,31-1,27 und ggf.), Polyetherpolyol (d.h. ohne eingebautem Kohlendioxid) mit Resonanzen bei 1,14-1,10 ppm.

Der Molenanteil des im Polymer eingebauten Carbonats in der Reaktionsmischung wird nach Formel (II) wie folgt berechnet, wobei folgende Abkürzungen verwendet werden:

F(6,01-5,88) = Fläche der Resonanz bei 6,01-5,88 ppm für olefinische Allylalkohol/Ether Gruppen (1 Protonen)
F(5,37-5,10) = Fläche der Resonanz bei 5,37-5,10 ppm für olefinische Allylalkohol/Ether Gruppen (2 Protonen)
F(1,51-1,49) = Fläche der Resonanz bei 1,51-1,49 ppm für cyclisches Carbonat (entspricht 3 Protonen)
F(1,31-1,27) = Fläche der Resonanz bei 1,31-1,27 ppm für Polyethercarbonatpolyol (entspricht 3 Protonen)
F(1,14-1,10) = Fläche der Resonanz bei 1,14-1,10 ppm für Polyetherpolyol (entspricht 3 Protonen)

Unter Berücksichtigung der relativen Intensitäten wurde gemäß der folgenden Formel (II) für das polymer gebundene Carbonat ("lineares Carbonat" LC) in der Reaktionsmischung in mol% umgerechnet:

$$LC_{mol\%} = \frac{F(1,31-1,27)}{F(1,51-1,49)+F(1,31-1,27)+F(1,14-1,10)+F(6,01-5,88)+F(5,37-5,10)} \cdot 100\% \qquad (II)$$

Der Gewichtsanteil (in Gew.-%) polymer-gebundenen Carbonats (LC') in der Reaktionsmischung wurde nach Formel (III) berechnet,

$$LC'_{gew.\%} = \frac{[F(1,31-1,27)] \cdot 102}{N} \cdot 100\% \qquad (III)$$

wobei sich der Wert für $N$ ("Nenner" $N$) nach Formel (IV) berechnet:

$$N = (F(1,51-1,49) + F(1,51-1,49)) \cdot 102 + F(1,14-1,10) \cdot 58 + (F(6,01-5,88) + F(5,37-5,10)) * 44 \qquad (IV)$$

Der Faktor 102 resultiert aus der Summe der Molmassen von $CO_2$ (Molmasse 44 g/mol) und der von Propylenoxid (Molmasse 58 g/mol). Der Faktor 44 resultiert aus der Molmasse von Allylalkohol (44 g/mol)

Der Gewichtsanteil (in Gew.-%) an $CO_2$ im Polyethercarbonatpolyol wurde nach Formel (V) berechnet:

$$CO_{2\,gew.\%} = LC_{gew.\%} \cdot \frac{44}{102} \qquad\qquad (V)$$

Der molare Gehalt (in mol%) an olefinischen Produkten (Allylalkohol/Ether-Produkten) (OL) wurde gemäß der folgenden Formel bestimmt (VI)

$$OL_{mol\%} = \frac{F(6,01-5,88)+F(5,37-5,10)}{F(1,51-1,49)+F(1,31-1,27)+ F(1,14-1,10)+ F(6,01-5,88)+F(5,37-5,10)} \cdot 100\,\% \qquad (VI)$$

Der Gewichtsanteil (in Gew.-%) olefinischer Produkte (Allylalkohol/Ether-Produkte) (OL') in der Reaktionsmischung wurde nach Formel (VII) berechnet,

$$OL'_{gew.\%} = \frac{[F(6,01-5,88)+F(5,37-5,10)]\,44}{N} \cdot 100\,\% \qquad\qquad (VII)$$

wobei sich der Wert für $N$ ("Nenner" $N$) nach Formel (IV) berechnet.

Um aus den Werten der Zusammensetzung der Reaktionsmischung die Zusammensetzung bezogen auf den Polymer-Anteil (bestehend aus Polyethercarbonatpolyol, aufgebaut aus Starter, cyclischem Propylencarbonat, wurden die Nicht-Polymer-Bestandteile der Reaktionsmischung (d.h. nicht umgesetztes cyclisches Propylencarbonat) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(58+44) umgerechnet (Siehe Formel V). Die Angabe des $CO_2$-Gehalts im Polyethercarbonatpolyol ("eingebautes $CO_2$"; siehe nachfolgende Beispiele) ist normiert auf das Polyethercarbonatpolyol-Molekül, dass bei der ringöffnenden Polymerisation entstanden ist.

Eingesetzte Rohstoffe:

Alle aufgezählten Chemikalien wurden vom genannten Hersteller in der angegebenen Reinheit erworben und ohne weitere Behandlung für die Synthese von Polyethercarbonatpolyolen verwendet.

| | |
|---|---|
| Kaliumorthovanadat ($K_3VO_4$): | ABCR 99,9 % |
| Kaliumphopshat ($K_3PO_4$): | Sigma-Aldrich 97 % |
| Cyclisches Ethylencarbonat (cEC): | Sigma-Aldrich 99 % |
| Cyclisches Propylencarbonat (cPC): | Sigma-Aldrich 99 % |
| 1,6-Hexandiol: | Sigma-Aldrich 99 % |

**Beispiel 1: Darstellung von Polyethercarbonatpolyolen durch ringöffnende Polymerisation von cyclischem Propylencarbonat in Gegenwart von 1,6-Hexandiol als Starter, $K_3VO_4$ als Katalysator und [18]Krone-6 als Co-Katalysator.**

Ein 500 mL Vierhalsglaskolben wurde mit Rückflusskühler, KPG-Rührer, Thermofühler, Stickstoffzuleitung und Gasaustritt/Gasabfuhr mit Überdruckventil ausgestattet. Anschließend wurden 200 g cyclisches Propylencarbonat, 36,72 g 1,6-Hexandiol, 2,76 g $K_3VO_4$ und 2,59 g [18]Krone-6 eingewogen. Für 30 Minuten wurde 10 L/h Stickstoff eingeleitet wobei die Suspension dabei mit 300 U/min gerührt wurde. Im Anschluss wurde die Suspension stufenweise auf 180°C aufgeheizt. Der entstehende Gasstrom wurde nach dem Rückflusskühler durch einen Blasenzähler abgelassen.

Die Reaktionsmischung wurde so lange bei der eingestellten Temperatur gehalten, bis die Gasentwicklung zum Erliegen kam.

Bei gegebenen Reaktionszeiten wurde der im Polyetherpolycarbonatpolyol eingebaute $CO_2$-Anteil und der Umsatz mittels $^1$H-NMR Spektroskopie ermittelt. Das Molekulargewicht wurde am Ende der Reaktion mittels Gelpermeationschromatographie bestimmt.

Die Eigenschaften des resultierenden Polyethercarbonatpolyols sind in Tabelle 1 dargestellt.

**Beispiel 2 (Vergleich): Darstellung von Polyethercarbonatpolyolen durch ringöffnende Polymerisation von cyclischem Propylencarbonat in Gegenwart von 1,6-Hexandiol als Starter und $K_3VO_4$ als Katalysator.**

Die Reaktion wurde analog zu Beispiel 1 durchgeführt, jedoch in Abwesenheit des Co-Katalysators. Die Eigenschaften des resultierenden Polyethercarbonatpolyols sind in Tabelle 1 dargestellt.

**Beispiel 3: Darstellung von Polyethercarbonatpolyolen durch ringöffnende Polymerisation von cyclischem Propylencarbonat in Gegenwart von 1,6-Hexandiol als Starter, $K_3VO_4$ als Katalysator und [18]Krone-6 als Co-Katalysator.**

Die Reaktion wurde analog zu Beispiel 1 durchgeführt, wobei 142 mg $K_3VO_4$ statt 2,76 g $K_3VO_4$ und 162 mg [18]Krone-6 statt 2.59 g [18]Krone-6 eingesetzt wurden. Die Eigenschaften des resultierenden Polyethercarbonatpolyols sind in Tabelle 1 dargestellt.

**Beispiel 4 (Vergleich): Darstellung von Polyethercarbonatpolyolen durch ringöffnende Polymerisation von cyclischem Propylencarbonat in Gegenwart von 1,6-Hexandiol als Starter und $K_3VO_4$ als Katalysator.**

Die Reaktion wurde analog zu Beispiel 3 durchgeführt, jedoch in Abwesenheit des Co-Katalysators. Die Eigenschaften des resultierenden Polyethercarbonatpolyols sind in Tabelle 1 dargestellt.

**Beispiel 5: Darstellung von Polyethercarbonatpolyolen durch ringöffnende Polymerisation von cyclischem Ethylencarbonat in Gegenwart von 1,6-Hexandiol als Starter, $K_3VO_4$ als Katalysator und [18]Krone-6 als Co-Katalysator.**

Die Reaktion wurde analog zu Beispiel 1 durchgeführt unter Verwendung folgender Chemikalien: 200 g cyclisches Ethylencarbonat, 33,5 g 1,6-Hexandiol, 2,63 g $K_3VO_4$ und 9,01 g [18]Krone-6 bei einer Reaktionstemperatur von 150°C.
Die Eigenschaften des resultierenden Polyethercarbonatpolyols sind in Tabelle 1 dargestellt.

**Beispiel 6: Darstellung von Polyethercarbonatpolyolen durch ringöffnende Polymerisation von cyclischem Ethylencarbonat in Gegenwart von 1,6-Hexandiol als Starter, $K_3VO_4$ als Katalysator.**

Die Reaktion wurde analog zu Beispiel 5 durchgeführt, jedoch in Abwesenheit des Co-Katalysators. Die Eigenschaften des resultierenden Polyethercarbonatpolyols sind in Tabelle 1 dargestellt.

**Beispiel 7: Darstellung von Polyethercarbonatpolyolen durch ringöffnende Polymerisation von cyclischem Ethylencarbonat in Gegenwart von 1,6-Hexandiol als Starter, $K_3PO_4$ als Katalysator und [18]Krone-6 als Co-Katalysator.**

Die Reaktion wurde analog zu Beispiel 5 durchgeführt unter Verwendung von 2,41 g $K_3PO_4$ anstelle von $K_3VO_4$.
Die Eigenschaften des resultierenden Polyethercarbonatpolyols sind in Tabelle 1 dargestellt.

**Beispiel 8: Darstellung von Polyethercarbonatpolyolen durch ringöffnende Polymerisation von cyclischem Ethylencarbonat in Gegenwart von 1,6-Hexandiol als Starter, $K_3PO_4$ als Katalysator.**

Die Reaktion wurde analog zu Beispiel 7 durchgeführt, jedoch in Abwesenheit des Co-Katalysators. Die Eigenschaften des resultierenden Polyethercarbonatpolyols sind in Tabelle 1 dargestellt.

**Tabelle 1:**

| Beispiel | Cycl. Carbonat | Katalysator | Eq. Katalysator ** | Co-Katalysator | Zeit [min] | $CO_2$ [Gew.-%] | Umsatz [%] |
|---|---|---|---|---|---|---|---|
| 1 | cPC | $K_3VO_4$ | 0.005 | [18]Krone-6 | 120*** | 18 | >99 |
| 2* | cPC | $K_3VO_4$ | 0.005 | - | 240*** | 18 | >99 |
| 3 | cPC | $K_3VO_4$ | 0.001 | [18] Krone-6 | 240*** | 17 | >99 |

(fortgesetzt)

| Beispiel | Cycl. Carbonat | Katalysator | Eq. Katalysator ** | Co-Katalysator | Zeit [min] | $CO_2$ [Gew.-%] | Umsatz [%] |
|---|---|---|---|---|---|---|---|
| 4* | cPC | $K_3VO_4$ | 0.001 | - | 340*** | 14 | >99 |
| 5 | cEC | $K_3VO_4$ | 0.5 | [18]Krone-6 | 150*** | 25,9 | >99 |
| 6* | cEC | $K_3VO_4$ | 0.5 | - | 300*** | 25,8 | >99 |
| 7 | cEC | $K_3PO_4$ | 0.5 | [18]Krone-6 | 315 | 24,8 | 85,8 |
| 8* | cEC | $K_3PO_4$ | 0.5 | - | 299 | 23,5 | 56,0 |
| * Vergleichsbeispiel; ** Moläquivalent relativ zum cycl. Carbonat und der H-funktionellen Startersubstanz; *** Zeitpunkt bei dem >99% Umsatz erreicht wurde | | | | | | | |

Tabelle 1 zeigt, dass durch den erfindungsgemäßen Einsatz eines Kronenethers die Aktivität des Katalysators für die Anlagerung eines cyclischen Carbonats an eine H-funktionelle Startersubstanz erhöht wird. So wird der vollständige Umsatz des cyclischen Carbonats unabhängig von der Konzentration des eingesetzten Katalysators deutlich früher erreicht (Beispiele 1, 3 und 5) oder bei annähernd gleicher Reaktionszeit der Umsatz des cyclischen Carbonats signifikant erhöht (Beispiel 7).

**Patentansprüche**

1.  Verfahren zur Herstellung von Polyethercarbonatpolyolen durch Anlagerung cyclischen Carbonats an eine H-funktionelle Startersubstanz in Anwesenheit eines Katalysators, **dadurch gekennzeichnet, dass** ein Kronenether als Co-Katalysator eingesetzt wird.

2.  Verfahren gemäß Anspruch 1, **dadurch gekennzeichnet, dass** als Katalysator mindestens eine Verbindung eingesetzt wird, die ausgewählt ist aus der Gruppe bestehend aus Titanverbindungen, Zinnverbindungen, Alkalimetall- und Erdalkalimetallsalzen, Molybdaten, Wolframaten, Vanadaten und Phosphaten.

3.  Verfahren gemäß Anspruch 1, **dadurch gekennzeichnet, dass** als Katalysator mindestens eine Verbindung eingesetzt wird, die ausgewählt ist aus der Gruppe bestehend aus Molybdaten, Wolframaten, Vanadaten und Phosphaten.

4.  Verfahren gemäß Anspruch 1, **dadurch gekennzeichnet, dass** als Katalysator mindestens eine Verbindung eingesetzt wird, die ausgewählt ist aus der Gruppe bestehend aus tribasischen Alkaliphosphaten, Alkalimetallorthovanadaten, Alkalimetallmetavanadaten, Alkalimetallwolframaten und Alkalimetallmolybdaten.

5.  Verfahren gemäß einem der Ansprüche 1 bis 4, **dadurch gekennzeichnet, dass** als cyclisches Carbonat Propylencarbonat, Ethylencarbonat oder eine Mischung aus Propylencarbonat und Ethylencarbonat eingesetzt wird.

6.  Verfahren gemäß einem der Ansprüche 1 bis 5, **dadurch gekennzeichnet, dass** der Kronenether nur Sauerstoff als Heteroatom aufweist.

7.  Verfahren gemäß einem der Ansprüche 1 bis 5, **dadurch gekennzeichnet, dass** als Kronenether mindestens eine Verbindung eingesetzt wird, die ausgewählt ist aus der Gruppe bestehend aus [12]Krone-4, [15]Krone-5, [18]Krone-6, [21]Krone-7 und [24]Krone-8.

8.  Verfahren gemäß einem der Ansprüche 1 bis 7, **dadurch gekennzeichnet, dass** die H-funktionelle Startersubstanz ein nach DIN 55672-1 (August 2007) gemessenes zahlenmittleres Molekulargewicht bis 10.000 g/mol, bevorzugt bis 5.000 g/mol, besonders bevorzugt bis 2.500 g/mol aufweist.

9.  Verfahren gemäß einem der Ansprüche 1 bis 8, **dadurch gekennzeichnet, dass** die H-funktionelle Startersubstanz ausgewählt ist aus mindestens einer Verbindung der Gruppe bestehend aus Wasser, Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol, Polyethercarbonatpolyole mit einem Molekulargewicht $M_n$ im Bereich von 150 bis 8000 g/mol bei einer Funktionalität von 2 bis 3 und Polyetherpolyole mit einem Molekulargewicht $M_n$ im Bereich von 150 bis 8000 g/mol und einer Funktionalität von 2 bis 3.

**10.** Verfahren gemäß einem der Ansprüche 1 bis 9, **dadurch gekennzeichnet, dass** der Katalysator in einem Anteil von 10 bis 50000 ppm, besonders bevorzugt 20 bis 30000 ppm und höchst bevorzugt 50 bis 20000 ppm vorliegt.

**11.** Verfahren gemäß einem der Ansprüche 1 bis 10, **dadurch gekennzeichnet, dass** H-funktionelle Startersubstanz, cyclisches Propylencarbonat und Katalysator kontinuierlich in den Reaktor zudosiert wird.

**12.** Verfahren gemäß Anspruch 11, **dadurch gekennzeichnet, dass** das resultierende Produkt kontinuierlich aus dem Reaktor abgeführt wird.

**13.** Verfahren gemäß einem der Ansprüche 1 bis 12, **dadurch gekennzeichnet, dass** das Verhältnis von Katalysator : Co-Katalysator weniger als 1,0 : 10,0 ist.

**14.** Polyethercarbonatpolyol erhalten durch ein Verfahren gemäß einem der Ansprüche 1 bis 13.

**15.** Verwendung des Polyethercarbonatpolyols gemäß Anspruch 14 in Wasch- und Reinigungsmittelformulierungen, Bohrflüssigkeiten, Kraftstoffadditiven, ionischen und nicht-ionischen Tensiden, Dispergiermittel, Schmiermitteln, Prozesschemikalien für die Papier- oder Textilherstellung, kosmetischen Formulierungen oder zur Herstellung von Polyurethanen.

Europäisches Patentamt

European Patent Office

Office européen des brevets

# EUROPÄISCHER RECHERCHENBERICHT

**Nummer der Anmeldung**

EP 20 15 5288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | ROBERT F. HARRIS: "Structural features of poly(alkylene ether carbonate) diol oligomers by capillary gas chromatography", JOURNAL OF APPLIED POLYMER SCIENCE, Bd. 37, Nr. 1, 5. Januar 1989 (1989-01-05), Seiten 183-200, XP055622074, US ISSN: 0021-8995, DOI: 10.1002/app.1989.070370114 | 14,15 | INV. C08G64/02 C08G64/30 C08G65/26 |
| Y | * Tabelle 1 * | 1-13 | |
| Y | STANISLAW SLOMKOWSKI ET AL: "Influence of Dibenzo-18-crown-6 Ether on the Kinetics of Anionic Polymerization of [beta]-Propiolactone", MACROMOLECULES, Bd. 9, Nr. 2, 1. März 1976 (1976-03-01), Seiten 367-369, XP055692634, WASHINGTON, DC, UNITED STATES ISSN: 0024-9297, DOI: 10.1021/ma60050a040 * das ganze Dokument * | 1-15 | |
| Y | STOLARZEWICZ A ET AL: "POTASSIUM HYDRIDE - THE NEW INITIATOR FOR ANIONIC POLYMERIZATION OF OXIRANES", MACROMOLECULAR RAPID COMMUNICATIONS, WILEY-VCH, DE, Bd. 17, Nr. 11, 1. November 1996 (1996-11-01), Seiten 787-793, XP000634324, ISSN: 1022-1336, DOI: 10.1002/MARC.1996.030171106 * das ganze Dokument * | 1-15 | **RECHERCHIERTE SACHGEBIETE (IPC)** C08G C09J |

-/--

Der vorliegende Recherchenbericht wurde für alle Patentansprüche erstellt

| Recherchenort | Abschlußdatum der Recherche | Prüfer |
|---|---|---|
| Den Haag | 8. Mai 2020 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung

EP 20 15 5288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | GROBELNY ZBIGNIEW ET AL: "Ring-opening polymerization of monosubstituted oxiranes in the presence of potassium hydride: determination of initiation course and structure of macromolecules by MALDI-TOF mass spectrometry", JOURNAL OF POLYMER RESEARCH, SPRINGER NETHERLANDS, NL, Bd. 26, Nr. 12, 20. November 2019 (2019-11-20), XP036956580, ISSN: 1022-9760, DOI: 10.1007/S10965-019-1943-X [gefunden am 2019-11-20] * das ganze Dokument * ----- | 1-15 | |
| A | PENGFEI GOU ET AL: "Kinetics and mechanism studies on scandium calix[6]arene complex initiating ring-opening polymerization of 2,2-dimethyltrimethylene carbonate", SCIENCE IN CHINA. SERIES B: CHEMISTRY, Bd. 50, Nr. 5, 1. Oktober 2007 (2007-10-01), Seiten 648-653, XP055692636, CN ISSN: 1006-9291, DOI: 10.1007/s11426-007-0073-1 * das ganze Dokument * ----- -/-- | 1-15 | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| Den Haag | 8. Mai 2020 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................................
& : Mitglied der gleichen Patentfamilie, übereinstimmendes Dokument

EPO FORM 1503 03.82 (P04C03)

**Europäisches Patentamt**
**European Patent Office**
**Office européen des brevets**

## EUROPÄISCHER RECHERCHENBERICHT

Nummer der Anmeldung

EP 20 15 5288

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | KURAN W ET AL: "COPOLYMERISATION OF OXIRANES WITH DIOXOLANONES AS A NOVEL METHOD FOR SYNTHESIS OF POLY(ETHER CARBONATES)", INTERNATIONAL POLYMER SCIENCE AND TECHNOLOGY, RAPRA TECHNOLOGY, SHREWABURY, GB, Bd. 21, Nr. 3, 1. Januar 1994 (1994-01-01), Seiten T/97-T/101, XP000453793, ISSN: 0307-174X * das ganze Dokument * ----- | 1-15 | |
| A | JAN BLANKENBURG ET AL: "Well-Defined Multi-Amino-Functional and Stimuli-Responsive Poly(propylene oxide) by Crown Ether Assisted Anionic Ring-Opening Polymerization", MACROMOLECULES, Bd. 50, Nr. 22, 28. November 2017 (2017-11-28), Seiten 8885-8893, XP055596543, WASHINGTON, DC, UNITED STATES ISSN: 0024-9297, DOI: 10.1021/acs.macromol.7b01324 * Abbildung 2 * ----- | 1-15 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 8. Mai 2020 | Hoffmann, Michael |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

EP 3 862 377 A1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0343572 A
- DE 2523352
- DE 1495299 A1
- EP 1359177 A

### In der Beschreibung aufgeführte Nicht-Patentliteratur

- **R.F. HARRIS.** *Journal of Applied Polymer Science,* 1989, vol. 37, 183-200